# EUROPÄISCHE PATENTSCHRIFT

(11) **EP 0 895 897 B1**
(45) Veröffentlichungstag und Bekanntmachung des Hinweises auf die Patenterteilung: **19.09.2001**
(21) Anmeldenummer: 98111783.1
(22) Anmeldetag: 26.06.1998
(51) Int. Cl.: B60R 1/06

(54) **Nutzfahrzeug mit einem Spiegel im Frontbereich**
Commercial vehicle with mirror mounted at the front
Véhicule industriel avec mirroir monté à l'avant

(30) Priorität: 07.08.1997 DE 19734169
(43) Veröffentlichungstag der Anmeldung: 10.02.1999
(73) Patentinhaber: MEKRA Lang GmbH & Co. KG, D-90765 Fürth (DE)
(72) Erfinder: Lang, Heinrich, 91465 Ergersheim (DE); Kolb, Alfred, 91613 Marktbergel (DE); Popp, Albrecht, 91629 Weihenzell (DE); Seiboth, Wolfgang, 91438 Bad Windsheim (DE)
(74) Vertreter: Hübner, Gerd, Dipl.-Phys.

(56) Entgegenhaltungen:
- DE-A- 2 841 974
- US-A- 2 511 971
- US-A- 2 884 218
- PATENT ABSTRACTS OF JAPAN vol. 013, no. 373 (M-861), 18. August 1989 & JP 01 127430 A (KOITO MFG CO LTD), 19. Mai 1989
- PATENT ABSTRACTS OF JAPAN vol. 005, no. 119 (M-081), 31. Juli 1981 & JP 56 057536 A (HOOEE:KK), 20. Mai 1981

## Beschreibung

Die Erfindung bezieht sich auf ein Nutzfahrzeug, insbesondere einen Bus, der im Frontbereich mindestens einen Spiegel aufweist.

Derartige Spiegel, bei denen es sich in der Regel um Außen-Rückblick-Spiegel handelt, müssen einen Mindestabstand über dem Boden von derzeit 2 m aufweisen. Wenn dies nicht der Fall ist, dann müssen diese Spiegel bei einer Berührung eines Gegenstandes oder einer außerhalb des Nutzfahrzeuges befindlichen Person ausweichen können. Derartige Spiegel, wie sie beispielsweise in DE-A-28 41 974 oder US-A-2 511 971 gezeigt sind, regelmäßig um eine vertikale Achse einstellbar. Die Erfahrung hat aber gezeigt, daß die Spiegel bei einem sogenannten Pendelschlagtest nicht zuverlässig um diese vertikale Achse weggeschwenkt werden.

Der Erfindung liegt daher die Aufgabe zugrunde, ein Nutzfahrzeug, insbesondere einen Bus, so auszugestalten, daß ein in einem Sicherheitsbereich befindlicher Außen-Spiegel bei einem Pendelschlag zuverlässig weggeschwenkt wird.

Diese Aufgabe wird erfindungsgemäß durch die Merkmale des Anspruches 1 gelöst. Durch das oberhalb eines vorgegebenen Sicherheitsbereichs befindliche Schwenkgelenk mit horizontaler, quer zur Fahrtrichtung verlaufender Schwenkachse wird der Spiegel bei einem Pendelschlag entweder nach vorn in Fahrtrichtung oder entgegen der Fahrrichtung und jeweils nach oben aus dem Sicherheitsbereich heraus verschwenkt. Mit sehr einfachen zuverlässigen Mitteln wird also ein zuverlässiges Ausweichen des .

Spiegels erreicht. Die erfindungsgemäßen Maßnahmen haben besondere Bedeutung bei sogenannten Niederflurbussen, die insgesamt eine sehr geringe Bauhöhe aufweisen und bei denen die Außen-Spiegel sich regelmäßig innerhalb des erwähnten Sicherheitsbereichs befinden. Auch bei einem über 2 m Höhe angebrachten Spiegel ist es von Vorteil, wenn bei einer Kollision mit Personen oder Gegenständen der Spiegel um eine horizontale Achse abklappt und dadurch Verletzungen und/oder Beschädigungen vermieden werden können.

Vorteilhafte Weiterbildungen und Ausgestaltungen der Erfindung ergeben sich aus den Unteransprüchen und der nachfolgenden Beschreibung eines Ausführungsbeispiels anhand der Zeichnung. Es zeigt
- Fig. 1: einen Bus in Seitenansicht mit einem Spiegelsystem
- Fig. 2: das Spiegelsystem in einer gegenüber Fig. 1 vergrößerten Darstellung und
- Fig. 3: einen Teil des Spiegelsystems gemäß dem Sichtpfeil III in Fig. 2

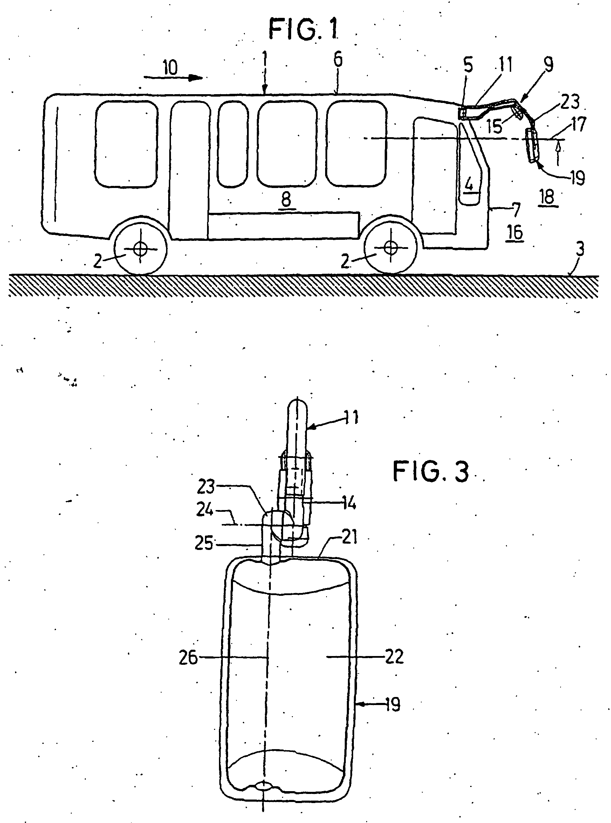

Bei dem in Fig. 1 dargestellten Nutzfahrzeug handelt es sich um einen Bus, der üblicherweise eine Karosserie 1 aufweist, die über ein Chassis mit Rädern 2 auf dem Boden 3 gestützt ist. Der Platz des Fahrers befindet sich im vorderen Bereich 4 des Busses. Am Übergangsbereich 5 zwischen dem Dach 6 und der Frontseite 7 und der rechten Seite 8 der Karosserie ist ein Spiegelsystem 9 angebracht, das - in Fahrtrichtung 10 gesehen - nach vom über die Frontseite 7 und nach rechts von der rechten Seite 8 vorsteht. Auf der in der Zeichnung nicht erkennbaren linken Seite ist spiegelsymmetrisch ein gleichartiges Spiegelsystem angebracht.

Dieses Spiegelsystem 9 weist einen Tragarm 11 auf, der mittels eines Halters 12 um eine vertikale Achse 13 schwenkbar an der Karosserie 1, und zwar in dem erwähnten Übergangsbereich 5, befestigt ist. Diese sich im wesentlichen senkrecht zu der vertikalen Achse 13, also im wesentlichen in der Horizontalen - bezogen auf die Fahrtrichtung 10 - nach vorn und zur Seite erstreckende Tragarm 11 weist in seinem vorderen Bereich einen schräg nach unten abgekröpften Tragarm-Abschnitt 14 auf, an dem ein sogenannter Frontspiegel 15 angebracht ist, mittels dessen der Fahrer den gesamten Frontbereich 16 unmittelbar vor der Frontseite 7 des Busses bis zum Boden 3 einsehen kann. Dieser Frontspiegel 15 ist oberhalb eines durch eine Linie 17 angedeuteten Sicherheitsbereichs 18 über dem Boden 3 angeordnet. Dieser Sicherheitsbereich 18 erstreckt sich bis zur Linie 17 über einen vorgegebenen Sicherheitsabstand, der nach EWG Richtlinie 71/127 (88/321) 4.2 2 m beträgt.

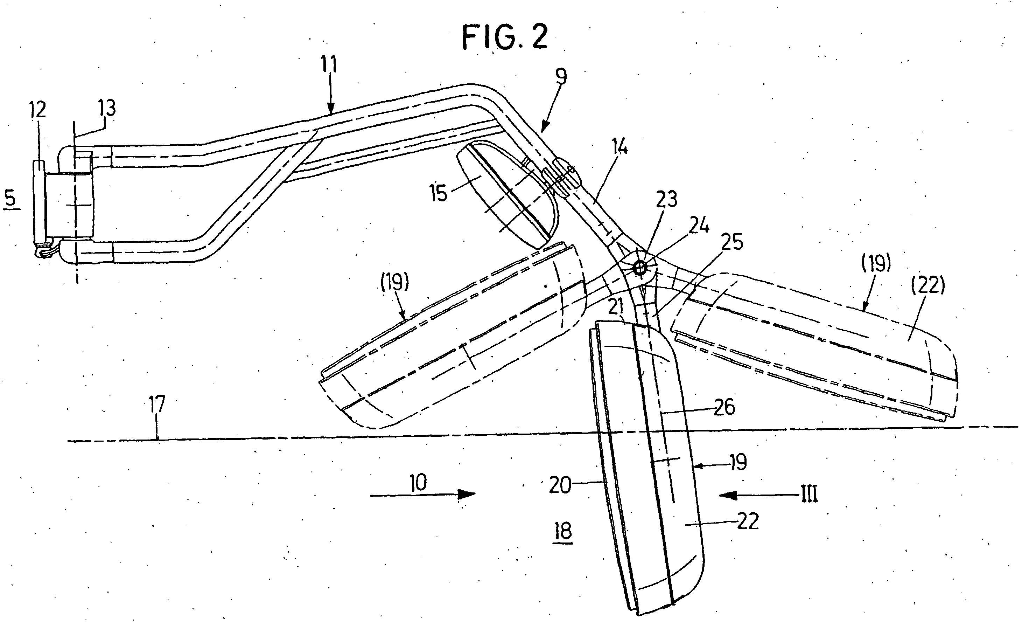

Am freien Ende des abgekröpften Tragarm-Abschnitts 14 ist ein Außen-Rückblick-Spiegel 19 angebracht. Dessen Spiegelseite 20 erstreckt sich in der in Fig. 2 ausgezogen dargestellten Betriebsstellung etwa vertikal. Dieser Spiegel 19 ist oberhalb der Oberseite 21 seines Gehäuses 22 mittels eines Gelenks 23 an dem Tragarm-Abschnitt 14, und zwar an dessen freiem Ende, angelenkt. Dieses Gelenk 23 weist eine horizontale Schwenkachse 24 auf, die quer zur Fahrtrichtung 10 verläuft. Der Spiegel 19 kann also - wie in Fig. 2 mittels Linien mit langen und kurzen Strichen angedeutet ist - in zwei Richtungen, nämlich zur Frontseite 7 hin, also entgegen der Fahrtrichtung 10, oder von der Frontseite 7 weg nach vorn, also in Fahrtrichtung 10, jeweils nach oben verschwenkt werden, so daß der tiefste Punkt des Gehäuses 22 sich nach dem Verschwenken oberhalb des Sicherheitsbereichs 18, also in einem Abstand von mindestens 2 m über dem Boden 3, befindet. Dieses Hochschwenken um die horizontale Schwenkachse 24 erfolgt, wenn der Spiegel 19 an einem Hindernis, beispielsweise einem an einer Haltestelle wartenden Fahrgast oder einem sonstigen Hindernis, anstößt.

Das Gelenk 23 ist derart ausgebildet, daß der aus seiner Betriebsstellung ausgelenkte Spiegel 19 in der ausgeschwenkten Stellung verbleibt. Hierzu ist das Gelenk 23 entweder als ein Friktions-Gelenk oder als ein Rast-Gelenk oder als ein Kugel-Gelenk ausgebildet. Zusätzlich kann ein nicht dargestellter Elektromotor vorgesehen sein, mittels dessen der Spiegel 19 vom Fahrer beim Heranfahren an ein Hindernis weggeschwenkt oder nach einem Verschwenken wieder in die Betriebsstellung zurückverschwenkt werden kann.

Das Gelenk 23 ist an einer Haltestange 25 angebracht, die im Gehäuse 22 des Spiegel 19 gelagert ist und den Spiegel 19 trägt. Der Spiegel 19 ist um die in der Betriebsstellung im wesentlich vertikal verlaufende Mittel-Längs-Achse 26 der Haltestange 25 in üblicher Weise einstellbar.

## Patentansprüche

1. Nutzfahrzeug, insbesondere Bus,
- mit einem im einstiegsseitigen Frontbereich (16) mittels einer Trageinrichtung (11) gehaltenen, wegschwenkbaren Spiegel (19),
- mit einem den Spiegel (19) mit der Trageinrichtung (11) verbindenden Gelenk (23),
-- das oberhalb eines sich vom Boden (3) nach oben erstreckenden Sicherheitsbereichs (18) vorgegebener Höhe (17) angeordnet ist,
-- dessen Schwenkachse (24) sich horizontal und quer zur Fahrtrichtung (10) erstreckt, und
-- das eine Verschwenkung des Spiegels (19) aus einer Betriebsstellung, in der der Spiegel (19) sich zumindest teilweise in dem Sicherheitsbereich (18) befindet, in eine Ausweichstellung oberhalb des Sicherheitsbereichs (18) ermöglicht.

2. Nutzfahrzeug nach Anspruch 1,
wobei das Gelenk (23) als Friktions-Gelenk ausgebildet ist.

3. Nutzfahrzeug nach Anspruch 1,
wobei das Gelenk (23) als Rast-Gelenk ausgebildet ist.

4. Nutzfahrzeug nach Anspruch 1,
wobei das Gelenk (23) als Kugel-Gelenk ausgebildet ist.

5. Nutzfahrzeug nach einem der Ansprüche 1 bis 4,
wobei der Spiegel (19) mittels eines Elektromotors um die Schwenkachse (24) des Gelenks (23) verschwenkbar ausgebildet ist.

## Claims

1. Utility vehicle, in particular a bus,
- with a mirror (19) capable of being swiveled out of the way and held by means of a bearing device (11) in the forward area (16) of the entrance side,
- with an articulation (23) connecting the mirror (19) to the bearing device (11),
-- which is located above a safety zone (18) of predetermined height (17) extending from the ground (3) upwards,
-- the swivel axis (24) of which extends horizontally at a right angle to the direction of travel (10) and
-- which makes it possible to swivel the mirror (19) from an operating position in which the mirror (19) is located at least in part within the safety zone 18, into a yielding zone above the safety zone (18).

2. Utility vehicle as in claim 1, whereby the articulation (23) is a friction articulation.

3. Utility vehicle as in claim 1, whereby the articulation 23 is a snap-in articulation.

4. Utility vehicle as in claim 1, whereby the articulation (23) is a ball-and-socket joint.

5. Utility vehicle as in one of the claims 1 to 4, whereby the mirror (19) can be swiveled around the swivel axis (24) of the articulation (23) by means of an electric motor.

## Revendications

1. Véhicule utilitaire, en particulier autobus, comprenant :
- un miroir (19) monté dans la zone frontale (16) du côté accès au moyen d'un dispositif porteur (11) et susceptible de basculer,
- une articulation (23) reliant le miroir (19) au dispositif porteur (11),
-- laquelle est agencée au-dessus d'une zone de sécurité (18) qui s'étend depuis le sol (3) vers le haut et qui présente une hauteur prédéterminée (17),
-- dont l'axe de basculement (24) s'étend horizontalement et perpendiculairement à la direction de circulation (10), et
-- qui permet un basculement du miroir (19) hors d'une position de fonctionnement dans laquelle le miroir (19) se trouve du moins en partie dans la zone de sécurité (18), jusque dans une position de dégagement au-dessus de la zone de sécurité (18).

2. Véhicule utilitaire selon la revendication 1, dans lequel l'articulation (23) est réalisée sous forme d'articulation à friction.

3. Véhicule utilitaire selon la revendication 1, dans lequel l'articulation (23) est réalisée sous forme d'articulation à enclenchement.

4. Véhicule utilitaire selon la revendication 1, dans lequel l'articulation (23) est réalisée sous forme d'articulation sphérique.

5. Véhicule utilitaire selon l'une quelconque des revendications 1 à 4, dans lequel le miroir (19) est réalisé de manière à pouvoir basculer autour de l'axe de basculement (24) de l'articulation (23) du moyen d'un moteur électrique.
